# EUROPÄISCHE PATENTSCHRIFT

(11) **EP 2 411 765 B1**
(45) Veröffentlichungstag und Bekanntmachung des Hinweises auf die Patenterteilung: **11.11.2015**
(21) Anmeldenummer: 10701678.4
(22) Anmeldetag: 28.01.2010
(51) Int. Cl.: G01C 19/5755, G01C 19/56, G02B 26/08

(54) **VORRICHTUNG ZUM RESONANTEN ANTREIBEN EINES MIKROMECHANISCHEN SYSTEMS**
APPARATUS FOR RESONANTLY DRIVING A MICROMECHANICAL SYSTEM
DISPOSITIF POUR ENTRAÎNEMENT RÉSONANT D'UN SYSTÈME MICROMÉCANIQUE

(30) Priorität: 25.03.2009 DE 102009001856
(43) Veröffentlichungstag der Anmeldung: 01.02.2012
(73) Patentinhaber: Robert Bosch GmbH, 70442 Stuttgart (DE)
(72) Erfinder: FRANKE, Axel, 71254 Ditzingen (DE); FREUND, Frank, 70439 Stuttgart (DE); MEISEL, Daniel Christoph, 71665 Vaihingen An Der Enz (DE)
(86) Internationale Anmeldenummer: PCT/EP2010/051008
(87) Internationale Veröffentlichungsnummer: WO 2010/108712

(56) Entgegenhaltungen:
- WO-A1-00/25170
- DE-A1-102006 040 250
- DE-C1- 10 029 501
- US-B1- 6 204 544

## Beschreibung

Die Erfindung beschreibt eine Vorrichtung zum resonanten Antreiben eines mikromechanischen Systems.

### Stand der Technik

In der Mikrosystemtechnik wirken Komponenten mit Abmessungen im Mikrometerbereich in Systemen (MEMS = Micro-Electro-Mechanical Systems) für verschiedenste Anwendungen zusammen. Solche mikromechanischen Systeme weisen in der Regel einen oder mehrere Sensoren und Aktoren sowie eine Steuerungselektronik auf. Mikromechanische Systeme bieten gegenüber konventionellen "Makrosystemen" vor allem Vorteile in der Kostenersparnis (geringer Verbrauch an Werkstoffen, Parallel-Fertigung) und in der Effizienz (geringer Energie- und Leistungsbedarf ermöglicht autonome Systeme). Zudem bieten sie ein großes Funktionsspektrum, hohe Funktionsdichten, neue Funktionalität (Integration elektrischer und nicht-elektrischer Funktionen). Denn durch die Integration und Miniaturisierung können neue physikalische Effekte ausgenutzt werden und die kurzen Informationswege führen zu kurzen Reaktionszeiten. Des Weiteren haben sie meist eine höhere Zuverlässigkeit als konventionelle Systeme, vor allem durch den Wegfall von Steckern und Kabeln.

Der Einsatz von mikromechanischen Systemen ist überall dort denkbar, wo Sensoren bzw. Aktoren und Elektronik zusammenarbeiten. Einer der größten Anwendungsbereiche sind Inertialsensoren, wie z. B. Gyroskope, Beschleunigungs und Neigungssensoren. Sie werden unter anderem im Kraftfahrzeugbereich für die Auslösung von Airbags und für die Schleuder- und Überschlagsdetektion eingesetzt. Insbesondere ein- oder mehrachsige mikromechanische Drehratensensoren werden für verschiedenste Anwendungen eingesetzt (im Kraftfahrzeugbereich z.B. für ESP, Navigation und Roll-Over-Sensing = ROSE; im Consumerbereich z.B. für Bildstabilisierung, Motion Detection und Navigation). Eine gängige Realisierungsform dieser Sensoren nutzt den Corioliseffekt: Eine an Federn aufgehängte Masse wird durch einen Antriebsmechanismus in Schwingungsbewegungen in eine erste Richtung versetzt, wodurch bei Anliegen einer Drehrate in einer zweiten Richtung eine Corioliskraft auf die Masse wirkt. Diese Kraft wirkt senkrecht sowohl zur Antriebsrichtung als auch zur anliegenden Drehrate und bewirkt beispielsweise eine Bewegung oder Oszillation der Masse in dieser dritten Richtung.

Aus der DE 195 23 895 ist ein Beschleunigungssensor bekannt, der insbesondere als Coriolis-Drehratensensor ausgebildet ist. In einer Ausführungsform ist der Coriolis-Drehratensensor auch für die Detektion von Linearbeschleunigungen ausgelegt. Dazu wird einer Schwingstruktur, welche durch seismische Massen gebildet ist und drehschwingungsbeweglich aufgehängt ist, eine zusätzliche elektronische Lageregelung zugeordnet, die auf die Schwingstruktur wirkende Linearbeschleunigungen erfasst und abdämpft. Diese elektronische Lageregelung wird durch an den Schwingmassen angeordnete Kammstrukturen gebildet, die mit weiteren Kammstrukturen in Eingriff sind, so dass durch eine Spannungsbeaufschlagung Kapazitäten zwischen den beiden Kammstrukturen messbar sind. Bei einer Auslenkung der Schwingstruktur durch eine Linearbeschleunigung ändert sich der Abstand zwischen den einzelnen Fingern der Kammstrukturen, wodurch sich eine Kapazitätsänderung einstellt, die mit der Lageregelungselektronik detektiert wird. Durch Veränderung der angelegten Spannung an die Kammstrukturen ist es durch elektrostatische Wirkung möglich, den Abstand zwischen den Kaminstrukturen auf einen vorgegebenen Sollwert einzuregeln. Die für die Abstandsregelung verwendete Spannungshöhe liefert gleichzeitig eine Aussage über die Größe der auf die Schwingstruktur einwirkenden Linearbeschleunigung.

Zum Antrieb von Drehratensensoren werden üblicherweise von einer Schaltung periodische Spannungsverläufe (z.B. Sinus- oder Rechteckpulse) erzeugt, welche dann über eine kapazitive Antriebsstruktur am Sensor in periodische Antriebskräfte gewandelt werden, welche die Struktur (also die seismische Masse) in Schwingung versetzen. Um den Sensor auf seiner mechanischen Resonanzfrequenz zu betreiben, ist es vorteilhaft, die Anregungsfrequenz der Antriebskraft geeignet zu wählen und/oder zu regeln. Bei der Resonanzfrequenz herrscht zwischen der durch die Antriebskraft hervorgerufenen Bewegungsgeschwindigkeit der seismischen Masse und der Antriebskraft keine Phasenverschiebung.

Damit die Schwingungsamplitude kontrolliert werden kann, verfügt ein Drehratensensor üblicherweise auch noch über Elemente zur Detektion der Antriebsbewegung sowie über entsprechende Regelkreise in der Auswerteschaltung. In derzeit verfügbaren Sensoren nimmt diese Antriebsschaltung jedoch einen relativ großen Raum ein, nämlich ca. 30 bis 40% der aktiven Schaltungsfläche.

### Offenbarung der Erfindung

Erfindungsgemäß wird eine Vorrichtung zum resonanten Antreiben eines mikromechanischen Systems vorgeschlagen, welche zumindest eine federschwingungsgelagerte seismische Masse, zumindest einen Antrieb zum Antreiben einer Schwingung der seismischen Masse und zumindest ein mit der seismischen Masse bewegungsgekoppeltes Element umfasst. Ferner umfasst die Vorrichtung zumindest ein Detektionselement zum Detektieren eines mit der Schwingung der seismischen Masse veränderlichen Relationsparameters zwischen bewegungsgekoppeltem Element und Detektionselement, wobei das Detektionselement eingerichtet ist, bei Erreichen eines vorbestimmten Wertes des Relationsparameters eine Unterbrechung des Schwingungsantriebs zu verursachen. Der Umstand, dass die erfindungsgemäße Vorrichtung dazu geeignet ist, ein mikromechanisches System resonant anzutreiben, bedeutet nicht, dass die Erfindung auf einen resonanten Antrieb beschränkt ist. Der Relationsparameter sowie dessen vorbestimmter Wert, bei dem die Unterbrechung des Schwingungsantriebes stattfindet, kann durchaus auch so gewählt werden, dass die seismische Masse nicht mit ihrer Resonanzfrequenz schwingt.

Die erfindungsgemäße Vorrichtung ermöglicht es in vorteilhafter Weise, die Antriebsschaltung auf ein Minimum zu reduzieren, ohne auf eine geregelte Amplitude und Resonanzfrequenz zu verzichten. Das vorgeschlagene Antriebskonzept verzichtet dabei fast vollständig auf aktive Schaltungsstrukturen und benötigt daher deutlich weniger Fläche als herkömmliche Antriebe. Auch die eigentliche Antriebsdetektion für die Kontrolle und Regelung der Antriebsamplitude ist MEMS-seitig flächeneffizienter zu realisieren.

Weitere vorteilhafte Ausgestaltungen der Erfindung ergeben sich aus den übrigen in den Unteransprüchen genannten Merkmalen.

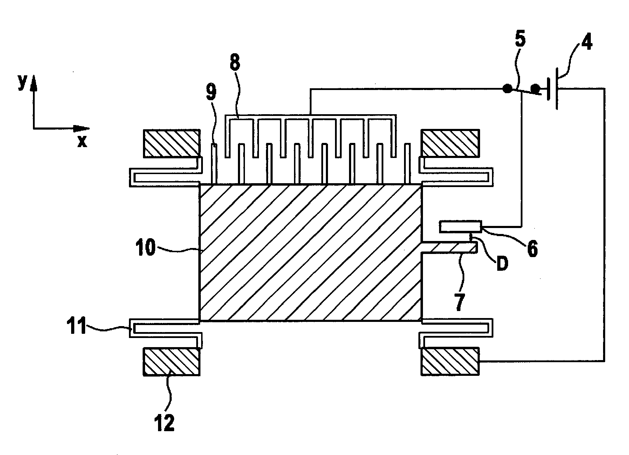

Die Erfindung wird nachfolgend anhand von Ausführungsbeispielen mit Bezug auf die Zeichnung näher erläutert.

### Beschreibung der Ausführungsbeispiele

Die Zeichnung zeigt beispielhaft eine Möglichkeit der Realisierung der erfindungsgemäßen Vorrichtung zum resonanten Antreiben eines mikromechanischen Systems.

So umfasst die Vorrichtung zumindest eine federschwingungsgelagerte seismische Masse. Dies ist in der Zeichnung durch ein Massenelement 10 realisiert, welches über Federelemente 11 schwingungsgelagert an Substratverankerungen 12 (oder an weiteren beweglichen Strukturen) befestigt ist.

Ferner umfasst die erfindungsgemäße Vorrichtung zumindest einen Antrieb zum Antreiben einer Schwingung der seismischen Masse 10. Dies ist in der Zeichnung beispielhaft durch einen Antrieb 8, 9; 4 realisiert, welcher zumindest an einer Seite der seismischen Masse 10 einen kapazitiven Kammantrieb 8, 9 zum Antreiben der Schwingung der seismischen Masse 10 aufweist. Der Kammantrieb 8, 9 ist mit einer für eine Auslenkung (in y-Richtung) der seismischen Masse 10 ausreichenden Spannung 4 beaufschlagbar. Der kapazitive Kammantrieb 8, 9 weist an der seismischen Masse 10 angeordnete erste Kammelektroden 9 auf, welche mit zweiten, von den Schwingungen der seismischen Masse 10 mechanisch entkoppelten Kammelektroden 8 berührungsfrei in Eingriff sind.

Die erfindungsgemäße Vorrichtung umfasst ferner zumindest ein mit der seismischen Masse 10 bewegungsgekoppeltes Element 7. Dieses Bewegungselement 7 ist in der Zeichnung durch einen Fortsatz realisiert, der sich seitlich aus der seismischen Masse 10 heraus erstreckt. Das Bewegungselement kann aus dem gleichen Material wie die seismische Masse 10 bestehen und vorzugsweise einstückig mit der Masse 10 hergestellt sein oder materialschlüssig mit der Masse 10 verbunden sein. Es ist aber auch möglich, dass das bewegungsgekoppelte Element 7 aus einem anderen Material besteht als die seismische Masse 10. Das Material des bewegungsgekoppelten Elements 7 kann dann in vorteilhafter Weise auf das Zusammenwirken mit dem nachstehend beschriebenen Detektionselement abgestimmt sein. Insbesondere kann das Material des Elements 7 elektrisch leitend sein, z. B. aus Metall gefertigt sein.

Weiterhin umfasst die erfindungsgemäße Vorrichtung zumindest ein Detektionselement 6 zum Detektieren eines mit der Schwingung der seismischen Masse 10 veränderlichen Relationsparameters zwischen bewegungsgekoppeltem Element 7 und Detektionselement 6. Das Detektionselement 6 ist eingerichtet, bei Erreichen eines vorbestimmten Wertes des Relationsparameters eine Unterbrechung 5 des Schwingungsantriebs 4 zu verursachen. Als Relationsparameter kommen neben dem Abstand zwischen bewegungsgekoppeltem Element 7 und Detektionselement 6 beliebige andere Parameter, wie zum Beispiel ein relativer Bewegungszustand (Geschwindigkeit, Beschleunigung) oder eine elektromagnetische Wechselwirkung zwischen den beiden Elementen, in Betracht, solange sie eine mit der Schwingung der seismischen Masse 10 korrelierbare Veränderung erfahren. Dabei bietet es sich an, dass das Detektionselement 6 von den Schwingungen der seismischen Masse 10 und des bewegungsgekoppelten Elements 7 mechanisch entkoppelt ist, so dass die Position des Detektionselements 6 einen absoluten Bezugspunkt für die Schwingungsbewegung der seismischen Masse 10 und des bewegungsgekoppelten Elements 7 darstellt. In der Zeichnung ist der vom Detektionselement 6 detektierte Relationsparameter der Abstand D zwischen bewegungsgekoppeltem Element 7 und Detektionselement 6. Das Detektionselement 6 ist eingerichtet, bei Erreichen eines vorbestimmten Abstandswertes zwischen bewegungsgekoppeltem Element 7 und Detektionselement 6 eine Unterbrechung der Spannungsversorgung 4 des kapazitiven Kammantriebs 8, 9 zu verursachen. Dazu wirkt das Detektionselement 6 auf einen Schalter 5, welcher bei Vorliegen der vorbestimmten Unterbrechungsbedingung die elektrische Verbindung zwischen Spannungsversorgung 4 und kapazitivem Kammantrieb 8, 9 unterbricht. Dadurch entfällt die auslenkende Kraft auf die seismische Masse 10, so dass die Masse 10 aufgrund der rückstellenden Federkraft der Federn 11 in ihre Ruhelage zurückkehrt (und von dort in die entgegengesetzte Auslenkungsrichtung -y überschwingen kann).

Gegenüber herkömmlichen Antriebsvorrichtungen wird also bei der erfindungsgemäßen Vorrichtung die Taktung des Antriebs durch das Sensorelement selbst (bzw. durch die Bewegung der seismischen Masse 10 selbst) erreicht. Dadurch kann auf aktive Schaltungsstrukturen zum Antrieb der Schwingung der seismischen Masse 10 verzichtet werden, wodurch wiederum deutlich weniger aktive Schaltungsfläche benötigt wird. Ferner ist es für die Funktion der erfindungsgemäßen Antriebsvorrichtung ausreichend, lediglich eine Gleichspannung zur Verfügung zu stellen. Vorzugsweise ist also die Spannungsversorgung 4 eine Gleichspannungsquelle. Besonders vorteilhaft lässt sich das erfindungsgemäße Antriebsprinzip mit Auswerteverfahren für die Drehratendetektion kombinieren, die im Basisband arbeiten und auf die Generierung von Vielfachen der Antriebsfrequenz für Auswertezwecke verzichten.

In der Zeichnung ist das bewegungsgekoppelte Element 7 so an der seismischen Masse 10 angebracht, dass bei ausreichender Auslenkung der Masse 10 (und damit des bewegungsgekoppelten Elements 7) in positiver y-Richtung aus der Ruhelage das bewegungsgekoppelte Element 7 in die Nähe des Detektionselements 6 gelangt (der Abstand zwischen bewegungsgekoppeltem Element 7 und Detektionselement 6 also einen vorbestimmten Wert unterschreitet), wodurch der Schalter 5 geöffnet und damit die Spannungszuführung zwischen den Elektroden 8 und 9 abgeschaltet wird. Es ist aber genauso gut möglich, das System auf Grundlage wachsender Entfernung zwischen bewegungsgekoppeltem Element 7 und Detektionselement 6 zu betreiben. Dazu könnte beispielsweise das bewegungsgekoppelte Element 7 auf der anderen Seite des Detektionselements 6 angeordnet sein (in der Zeichnung also über dem Detektionselement 6). Dann befindet sich das bewegungsgekoppelte Element 7 in der Ruhelage der seismischen Masse 10 zunächst in Nähe zum Detektionselements 7. Mit zunehmender Auslenkung der seismischen Masse 10 in positiver y-Richtung (in der Zeichnung also nach oben) wächst dann der Abstand zwischen bewegungsgekoppeltem Element 7 und Detektionselement 7. Überschreitet der Abstand dann einen vorbestimmten Wert, wird der Schalter 5 geöffnet und damit die Spannungszuführung zwischen den Elektroden 8 und 9 abgeschaltet.

Für die Detektion der Auslenkung der seismischen Masse 10 mittels des bewegungsgekoppelten Elements 7 und des Detektionselements 6 zum Zweck der Unterbrechung der Antriebsspannung 4 können verschiedene physikalische Effekte und darauf abgestimmte Ausgestaltungen und Anordnungen der Elemente 6 und 7 genutzt werden.

Zum einen ist es erfindungsgemäß mögliich das Prinzip des Moving Gate zu verwenden: Hierbei wird das Detektionselement 6 als Feldeffekttransistor (FET) ausgeführt, wobei das elektrische Feld zum Schalten des FET dadurch modifiziert wird, dass das Element 7, das auf einem geeigneten elektrischen Potential liegt, bei einer Auslenkung der seismischen Masse 10 über den Kanalbereich des FET geführt wird. Anders ausgedrückt ist das elektrische Feld zum Schalten des FET und die damit verbundene Unterbrechung des Schwingungsantriebs dadurch beeinflussbar, dass das bewegungsgekoppelte Element 7 durch die Schwingung der seismischen Masse 10 über den Kanalbereich des FET geführt wird.

Eine andere Möglichkeit besteht in der Ausnutzung des Tunneleffekts: Das Element 7 ist mit einer Tunnelspitze in horizontaler oder vertikaler Richtung versehen. Ein Gegenstück zu dieser Tunnelspitze ist im festen Detektionselement 6 derart angebracht, dass sich die beiden Spitzen bei der gewünschten Auslenkung so weit annähern, dass ein ausreichender Tunnelstrom fließen kann, welcher das Schalten von Schalter 5 bewirkt. Anders gesagt weisen das Detektionselement 6 und das bewegungsgekoppelte Element 7 jeweils eine Tunnelspitze auf, die eine Tunnelbrücke für elektrischen Strom bilden, über welche bei einer vorbestimmten Annäherung der beiden Tunnelspitzen ein vorbestimmter Tunnelstrom fließt, welcher das Schalten des Unterbrechungsschalters 5, vorzugsweise das Unterbrechen des Schwingungsantriebs, bewirkt.

Eine weitere Möglichkeit besteht darin, dass das Detektionselement 6 und das bewegungsgekoppelte Element 7 eine durch den zwischen ihnen veränderlichen Abstand D veränderliche elektrische Kapazität bilden. Das Erreichen eines vorbestimmten Schwellwertes der Kapazität bewirkt das Schalten des Unterbrechungsschalters 5, vorzugsweise das Unterbrechen des Schwingungsantriebs. Im Gegensatz zur herkömmlichen Antriebsdetektion ist hier vorteilhafterweise eine qualitative Detektion eines Schwellwerts ausreichend. Allerdings bedingt die kapazitive Detektion gegenüber den beiden anderen Verfahren einen geringfügig höheren Schaltungsaufwand.

Um verschiedene Antriebsamplituden zu realisieren und den Anschwingvorgang zu erleichtern, können statt nur einem abschaltenden Detektionselement 6 mehrere solche eingesetzt werden, die durch entsprechende Verschaltungen z.B. beim Abgleich des Sensors aktiviert werden.

Anstelle des einseitigen Antriebs, wie in der Zeichnung dargestellt, ist auch ein beidseitiger Antrieb der Struktur denkbar, wobei dann auch die Abschaltung der jeweiligen Antriebskämme auf jeder Seite erfolgen muss. Vorzugsweise ist also an der gegenüberliegenden Seite der seismischen Masse 10 ein zweiter Kammantrieb in analoger Weise zu dem ersten Kammantrieb 8, 9 vorgesehen, wobei Antrieb und Antriebsunterbrechung des zweiten Kammantriebs um 180° phasenverschoben zu Antrieb und Antriebsunterbrechung des ersten Kammantriebs erfolgen.

Für den Fall, dass ein bloßes Unterbrechen der Spannungsversorgung nicht ausreichend ist und nicht schnell genug zu einer elektromagnetischen Entkopplung der Kammelektroden 8 von den Kammelektroden 9 führt, kann eine Entladung der Elektroden vorgenommen werden. Die erfindungsgemäße Vorrichtung umfasst daher vorzugsweise eine Entladungseinrichtung zum Entladen der ersten 9 und/oder zweiten Kammelektroden 8 bei oder unmittelbar nach Unterbrechung der Spannungsversorgung des kapazitiven Kammantriebs 8, 9.

Neben dem in der Zeichnung exemplarisch gewählten kapazitiven Antrieb ist es beispielsweise auch möglich, den Antrieb zum Antreiben der Schwingung der seismischen Masse 10 in piezoelektrischer, magnetischer oder thermoelastischer Funktionsweise zu realisieren.

Bei dem mikromechanischen System, wie es in der vorliegenden Erfindung in Bezug genommen wird, kann es sich beispielsweise um einen ein- oder mehrachsigen mikromechanischen Drehratensensor, um einen Mikrospiegel oder ein Mikrospiegelarray, oder um einen Resonator handeln. Neben linear angetriebenen resonanten Systemen können auch rotatorische Schwinger angetrieben werden. Neben einem Antrieb in der Substratebene (= Zeichenebene) sind auch Schwingungsbewegungen senkrecht zur Substratebene möglich.

Wie vorstehend eingehend erläutert, ist die vorliegende Erfindung in hohem Maße geeignet, insbesondere bei Drehratensensoren Schaltungsfläche einzusparen.

## Patentansprüche

1. Vorrichtung zum resonanten Antreiben eines mikromechanischen Systems, umfassend
zumindest eine federschwingungsgelagerte (11, 12) seismische Masse (10),
zumindest einen Antrieb (8, 9; 4) zum Antreiben einer Schwingung der seismischen Masse (10),
zumindest ein mit der seismischen Masse (10) bewegungsgekoppeltes Element (7), und
zumindest ein Detektionselement (6) zum Detektieren eines mit der Schwingung der seismischen Masse (10) veränderlichen Relationsparameters zwischen bewegungsgekoppeltem Element (7) und Detektionselement (6),
**dadurch gekennzeichnet, dass**
das Detektionselement (6) einen Feldeffekttranistor (FET) aufweist, welcher eingerichtet ist, bei Erreichen eines vorbestimmten Wertes des Relationsparamters eine Unterbrechung (5) des Schwingungsantriebs (4) zu verursachen, wobei das elektrische Feld zum Schalten des FET und die damit verbundene Unterbrechung (5) des Schwingungsantriebs (4) dadurch beeinflussbar ist, dass das bewegungsgekoppelte Element (7), das auf einem geeigneten elektrischen Potential liegt, durch die Schwingung der seismischen Masse (10) über den Kanalbereich des FET geführt wird.

2. Vorrichtung nach Anspruch 1,
wobei der Antrieb (8, 9; 4) keinen mechanischen Kontakt zur seismischen Masse (10) und zum bewegungsgekoppelten Element (7) aufweist.

3. Vorrichtung nach Anspruch 1 oder 2,
wobei der Antrieb (8, 9; 4) zumindest an einer Seite der seismischen Masse (10) einen kapazitiven Kammantrieb (8, 9) zum Antreiben der Schwingung der seismischen Masse (10) aufweist, welcher mit einer für eine Auslenkung (y) der seismischen Masse (10) ausreichenden Spannung (4) beaufschlagbar ist.

4. Vorrichtung nach Anspruch 3,
wobei der vom Detektionselement (6) detektierte Relationsparameter der Abstand (D) zwischen bewegungsgekoppeltem Element (7) und Detektionselement (6) ist, und das Detektionselement (6) eingerichtet ist, bei Erreichen eines vorbestimmten Abstandswertes zwischen bewegungsgekoppeltem Element (7) und Detektionselement (6) eine Unterbrechung (5) der Spannungsversorgung (4) des kapazitiven Kammantriebs (8, 9) zu verursachen.

5. Vorrichtung nach Anspruch 3 oder 4,
wobei der kapazitive Kammantrieb (8, 9) an der seismischen Masse (10) angeordnete erste Kammelektroden (9) aufweist, welche mit zweiten, von den Schwingungen der seismischen Masse (10) mechanisch entkoppelten Kammelektroden (8) berührungsfrei in Eingriff sind.

6. Vorrichtung nach einem der Ansprüche 3 bis 5,
wobei an einer anderen, der einen Seite gegenüberliegenden Seite der seismischen Masse (10) ein zweiter Kammantrieb in analoger Weise zu dem ersten Kammantrieb der Ansprüche 3 bis 5 vorgesehen ist, wobei Antrieb und Antriebsunterbrechung des zweiten Kammantriebs um 180° phasenverschoben zu Antrieb und Antriebsunterbrechung des ersten Kammantriebs erfolgen.

7. Vorrichtung nach einem der Ansprüche 3 bis 6,
ferner umfassend eine Entladungseinrichtung zum Entladen der ersten (9) und/oder zweiten Kammelektroden (8) bei oder unmittelbar nach Unterbrechung (5) der Spannungsversorgung (4) des kapazitiven Kammantriebs (8, 9).

8. Vorrichtung nach Anspruch 1,
wobei der Antrieb zum Antreiben der Schwingung der seismischen Masse (10) in piezoelektrischer, magnetischer oder thermoelastischer Funktionsweise realisiert ist.

9. Vorrichtung nach einem der vorangehenden Ansprüche,
wobei mehrere Detektionselemente (6) für verschiedene Antriebsamplituden der Schwingung der seismischen Masse (10) vorgesehen sind.

10. Vorrichtung nach einem der vorangehenden Ansprüche,
wobei das/die Detektionselement/e (6) von den Schwingungen der seismischen Masse (10) und des bewegungsgekoppelten Elements (7) mechanisch entkoppelt ist/sind, so dass die Position der/des Detektionselemente/s (6) einen absoluten Bezugspunkt für die Schwingungsbewegung der seismischen Masse (10) und des bewegungsgekoppelten Elements (7) darstellt.

11. Vorrichtung nach einem der Ansprüche 3 bis 10,
wobei die Spannungsversorgung (4) eine Gleichspannungsquelle ist.

12. Vorrichtung nach einem der vorangehenden Ansprüche,
wobei es sich bei dem mikromechanischen System um einen ein- oder mehrachsigen mikromechanischen Drehratensensor, um einen Mikrospiegel oder ein Mikrospiegelarray, oder um einen Resonator handelt.

## Claims

1. Apparatus for resonant driving of a micromechanical system, comprising at least one seismic mass (10) mounted with spring oscillations (11, 12), at least one drive (8, 9; 4) for driving an oscillation of the seismic mass (10), at least one element (7) which is movement-coupled to the seismic mass (10), and at least one detection element (6) for detecting a relation parameter, which is variable with the oscillation of the seismic mass (10), between the movement-coupled element (7) and the detection element (6), **characterized in that** the detection element (6) has a field-effect transistor (FET), which is designed to cause an interruption (5) to the oscillation drive (4) when a predetermined value of the relation parameter is reached, wherein the electrical field for switching the FET and the interruption (5) to the oscillation drive (4) associated therewith can be influenced by virtue of the fact that the movement-coupled element (7), which is at a suitable electrical potential, is guided via the channel region of the FET by the oscillation of the seismic mass (10).

2. Apparatus according to Claim 1, wherein the drive (8, 9; 4) does not have any mechanical contact with the seismic mass (10) and with the movement-coupled element (7).

3. Apparatus according to Claim 1 or 2, wherein the drive (8, 9; 4) has a capacitive comb drive (8, 9) for driving the oscillation of the seismic mass (10) at least on one side of the seismic mass (10), it being possible for a voltage (4) which is sufficient for deflecting (y) the seismic mass (10) to be applied to said capacitive comb drive (8, 9).

4. Apparatus according to Claim 3, wherein the relation partner detected by the detection element (7) is the distance (D) between the movement-coupled element (7) and the detection element (6), and the detection element (6) is designed to cause an interruption (5) to the voltage supply (4) to the capacitive comb drive (8, 9) when a predetermined distance value between the movement-coupled element (7) and the detection element (6) is reached.

5. Apparatus according to Claim 3 or 4, wherein the capacitive comb drive (8, 9) has first comb electrodes (9) arranged on the seismic mass (10), which comb electrodes are in engagement, without any touching contact, with second comb electrodes (8), which are mechanically decoupled from the oscillations of the seismic mass (10).

6. Apparatus according to one of Claims 3 to 5, wherein a second comb drive is provided similarly to the first comb drive from Claims 3 to 5 on a different side, opposite the one side, of the seismic mass (10), wherein driving and interruption to the driving of the second comb drive take place with a 180° phase shift with respect to the driving and interruption to the driving of the first comb drive.

7. Apparatus according to one of Claims 3 to 6, further comprising a discharge device for discharging the first comb electrode (9) and/or second comb electrode (8) when or immediately after there is an interruption (5) to the voltage supply (4) of the capacitive comb drive (8, 9).

8. Apparatus according to Claim 1, wherein the drive for driving the oscillation of the seismic mass (10) is implemented with a piezoelectric, magnetic or thermoelastic mode of operation.

9. Apparatus according to one of the preceding claims, wherein a plurality of detection elements (6) for different drive amplitudes of the oscillation of the seismic mass (10) are provided.

10. Apparatus according to one of the preceding claims, wherein the detection element(s) (6) is/are mechanically decoupled from the oscillations of the seismic mass (10) and the movement-coupled element (7), with the result that the position of the detection element(s) (6) represents an absolute reference point for the oscillation movement of the seismic mass (10) and the movement-coupled element (7).

11. Apparatus according to one of Claims 3 to 10, wherein the voltage supply (4) is a DC voltage source.

12. Apparatus according to one of the preceding claims, wherein the micromechanical system is a single-axis or multiple-axis micromechanical angular rate sensor, a micromirror or a micromirror array or a resonator.

## Revendications

1. Ensemble d'entraînement en résonnance d'un système micromécanique, le système comprenant
au moins une masse sismique (10) montée (11, 12) de manière à pouvoir osciller élastiquement,
au moins un entraînement (8, 9; 4) qui entraîne une oscillation de la masse sismique (10),
au moins un élément (7) couplé à déplacement à la masse sismique (10) et
au moins un élément de détection (6) qui détecte un paramètre de relation entre l'élément (7) couplé à déplacement et l'élément de détection (6) et se modifiant avec l'oscillation de la masse sismique (10), **caractérisé en ce que**
l'élément de détection (6) présente un transistor à effet de champ (FET) conçu pour provoquer une interruption (5) de l'entraînement (4) en oscillation lorsqu'une valeur prédéterminée du paramètre de relation est atteinte, le champ électrique de commutation du FET et l'interruption (5) de l'entraînement (4) en oscillation qui y est relié pouvant être influencée par le fait que l'élément (7) couplé à déplacement placé à un potentiel électrique approprié est guidé sur la plage de canal du FET par l'oscillation de la masse sismique (10).

2. Ensemble selon la revendication 1, dans lequel l'entraînement (8, 9; 4) ne présente aucun contact mécanique avec la masse sismique (10) et l'élément (7) couplé à déplacement.

3. Ensemble selon les revendications 1 ou 2, dans lequel l'entraînement (8, 9; 4) présente au moins sur un côté de la masse sismique (10) un entraînement capacitif (8, 9) en peigne qui entraîne l'oscillation de la masse sismique (10) et qui peut être alimenté en une tension (4) qui suffit pour déplacer (y) la masse sismique (10).

4. Ensemble selon la revendication 3, dans lequel le paramètre de relation détecté par l'élément de détection (6) est la distance (D) entre l'élément (7) couplé à déplacement et l'élément de détection (6) et en ce que l'élément de détection (6) est conçu pour provoquer une interruption (5) de la tension (4) alimentant l'entraînement capacitif (8, 9) en peigne lorsqu'une valeur de distance prédéterminée entre l'élément (7) couplé à déplacement et l'élément de détection (6) est atteinte.

5. Ensemble selon les revendications 3 ou 4, dans lequel l'entraînement capacitif (8, 9) en peigne présente des premières électrodes (9) en peigne disposées sur la masse sismique (10) et engageant sans contact des deuxièmes électrodes (8) en peigne découplées mécaniquement des oscillations de la masse sismique (10).

6. Ensemble selon l'une des revendications 3 à 5, dans lequel un deuxième entraînement en peigne est prévu de manière analogue au premier entraînement en peigne des revendications 3 à 5 sur un autre côté opposé de la masse sismique (10) du deuxième entraînement en peigne s'effectuant à un déphasage de 180° par rapport à l'entraînement et l'interruption de l'entraînement du premier entraînement en peigne.

7. Ensemble selon l'une des revendications 3 à 6, comprenant en outre un dispositif de décharge qui décharge les premières électrodes en peigne (9) et/ou les deuxièmes électrodes en peigne (8) lors de l'interruption (5) ou immédiatement après l'interruption (5) de la tension (4) alimentant l'entraînement capacitif (8, 9) en peigne.

8. Ensemble selon la revendication 1, dans lequel l'entraînement qui entraîne les oscillations de la masse sismique (10) est réalisé de manière à fonctionner en mode piézoélectrique, magnétique ou thermoélastique.

9. Ensemble selon l'une des revendications précédentes, dans lequel plusieurs éléments de détection (6) sont prévus pour différentes amplitudes d'entraînement des oscillations de la masse sismique (10).

10. Ensemble selon l'une des revendications précédentes, dans lequel le ou les éléments de détection (6) sont découplés mécaniquement des oscillations de la masse sismique (10) et de l'élément (7) couplé à déplacement, de sorte que la position du ou des éléments de détection (6) constitue un point de référence absolu pour le déplacement d'oscillation de la masse sismique (10) et de l'élément (7) couplé à déplacement.

11. Ensemble selon l'une des revendications 3 à 10, dans lequel l'alimentation (4) en tension est une source de tension continue.

12. Ensemble selon l'une des revendications précédentes, dans lequel le système micromécanique est un capteur de vitesse de rotation micromécanique à un ou plusieurs axes, un micro-miroir, une batterie de micro-miroirs ou un résonateur.
